(19) Europäisches Patentamt / European Patent Office / Office européen des brevets

(11) EP 2 176 347 B1

(12) **EUROPEAN PATENT SPECIFICATION**

(45) Date of publication and mention of the grant of the patent:
**02.02.2011 Bulletin 2011/05**

(21) Application number: **08772540.4**

(22) Date of filing: **14.07.2008**

(51) Int Cl.:
*C08L 51/04* (2006.01) *C08L 55/02* (2006.01)
*C08L 25/06* (2006.01) *C08L 23/08* (2006.01)

(86) International application number:
**PCT/US2008/069969**

(87) International publication number:
**WO 2009/012219 (22.01.2009 Gazette 2009/04)**

(54) **COMPOSITIONS EXHIBITING HIGH ESCR AND COMPRISING MONOVINYLIDENE AROMATIC POLYMER AND ETHYLENE/ALPHA-OLEFIN COPOLYMER**

ZUSAMMENSETZUNGEN, DIE EINE HOHE ESCR AUFWEISEN UND MONOVINYLIDENAROMAT-POLYMER UND ETHYLEN/ALPHA-OLEFIN-COPOLYMER UMFASSEN

COMPOSITIONS PRESENTANT UNE RESISTANCE ELEVEE A LA FISSURATION SOUS CONTRAINTE DANS UN ENVIRONNEMENT DONNE ET CONTENANT UN POLYMERE AROMATIQUE MONOVINYLIDENE ET UN COPOLYMERE ETHYLENE/ALPHA-OLEFINE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.07.2007 US 950172 P**

(43) Date of publication of application:
**21.04.2010 Bulletin 2010/16**

(73) Proprietor: **Styron Europe GmbH**
**8810 Horgen (CH)**

(72) Inventors:
- **BOUQUET, Gilbert**
  **B-9000 Gent (BE)**
- **KARJALA, Theresa**
  **Lake Jackson, TX 77566 (US)**
- **KONZE, Wayde, V.**
  **Midland, MI 48640 (US)**
- **LAKEMAN, Pascal, E.r.e.j.**
  **NL-4624JH Bergen Op Zoom (NL)**
- **MONTOYA-GONI, Amaia**
  **NL-4624GN Bergen Op Zoom (NL)**
- **VOSSEN, Roeland, H.r.**
  **NL-4561VW Hulst (NL)**

(74) Representative: **Grünecker, Kinkeldey, Stockmair & Schwanhäusser Anwaltssozietät**
**Leopoldstrasse 4**
**80802 München (DE)**

(56) References cited:
**EP-A- 0 329 283**
**WO-A-2004/031292**
**JP-A- 11 269 322**
**US-A1- 2004 001 962**
**US-B1- 6 380 305**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 176 347 B1

## Description

FIELD OF THE INVENTION

This invention relates to compositions comprising monovinylidene aromatic polymers. In one aspect, the invention relates to compositions comprising monovinylidene aromatic polymers admixed with a low molecular weight ethylene/alpha-olefin (EAO) copolymer while in another aspect, the invention relates to compositions comprising monovinylidene aromatic polymers admixed with a low molecular weight ethylene/propylene (EP) copolymer. In yet another aspect, the invention relates to a process of increasing the environmental stress crack resistance (ESCR) of a composition comprising a monovinylidene aromatic polymer by admixing with the polymer a small amount of an EAO copolymer.

BACKGROUND OF THE INVENTION

High impact polystyrene (HIPS) is a common monovinylidene aromatic polymer used in many applications such as, for instance, refrigerator liners and food packaging. Both with refrigerator liners and food packaging, resistance to the oils and fats contained in food stuffs is critical to ensure lasting performance. This resistance to oils and fats, e.g., corn oil, palm oil, etc., is generally tested by the environmental stress crack resistance ESCR test where article specimens are placed under strain in an oil or fat of choice, and the tensile properties of the specimens are measured at timed intervals.

For obvious reasons there is a continuing interest to upgrade the ESCR performance of HIPS and similar polymers. Presently, the main methods to change ESCR are to alter the rubber content, the rubber morphology (i.e., rubber particle size, rubber phase volume, etc.), the matrix molecular weight, and/or the matrix molecular weight distribution of the polymer. These choices, however, significantly reduce the degrees of freedom within the process for the making and molding the polymer, and can reduce the qualities of the polymer itself.

EP-A-0329283 discloses polystyrene compositions resistant to chemically induced stress cracking that consist essentially of (1) 70 to 90% by weight of a polystyrene component consisting of 15 to 100 wt% high impact polystyrene and optionally up to 85 wt% polystyrene homopolymer; (2) 5 to 25 wt% polyolefin selected from low density polyethylene (including linear low density polyethylene), low density polypropylene and low density copolymers of ethylene and propylene; and (3) 2 to 5 wt% styrene-butadiene radial block copolymer.

US 6380305 discloses polymeric compositions having a gloss at 60 degrees greater than 85%, and an environmental stress crack resistance until breakage at 1000 psi (6.9 MPa) of more than 60 minutes that comprise (a) a high gloss rubber modified vinyl aromatic polymer and (b) a polyolefin having a stress exponent less than 1.70, preferably high density polyethylene. In one embodiment, the composition comprises greater than 70% to 86% (a), 10% to 25% (b), and from 3% to 20% of a compatibilizing polymer, all percentages based on the total weight of said components. The compatibilizing polymer preferably is selected from diblock styrene butadiene copolymers, triblock styrene butadiene copolymers, diblock styrene isoprene copolymers, triblock styrene isoprene copolymers, and mixtures thereof.

JP-A-11269322 discloses thermoplastic compositions comprising a rubber-modified styrene-based resin and an ethylene-$\alpha$-olefin copolymer that have good chemical resistance and improved mechanical characteristics. The compositions comprise 5 to 95 wt% rubber-modified styrene-based resin containing a rubber-like polymer dispersed in a granular state, 95 to 5 wt% of an ethylene- C3-18 $\alpha$-olefin copolymer having at most 90°C peak temperature to show the maximum height in an elution curve of temperature rising elution fractionation(TFEF) and a ratio of peak height to width of 1/3 height in the maximum peak of at least 2.

Another method to change the ESCR of a HIPS polymer is by the use of an additive. For example, US2004/0001962 teaches the use of polyisobutylene, polymerized alpha-olefins of at least 10 carbon atoms, atactic polypropylene, or a polyolefin copolymer. These additives can be admixed with mineral oil. With respect to the polyolefin copolymer additive, this reference teaches that it can be an EP copolymer and that the ethylene content can vary from 0.1 to 99.9 weight percent (wt%) based on the weight of the copolymer. The reference also notes that copolymers with a heat of fusion greater than 190 J/g result in monovinylidene aromatic polymer compositions with low ESCR while copolymers with a heat of fusion less than 190 J/g result in monovinylidene aromatic polymer compositions with good ESCR. The reference does not discuss the molecular weight of the polyolefin copolymer.

SUMMARY OF THE INVENTION

The present invention is based on the discovery that the ability of an EAO copolymer to increase the ESCR of a monovinylidene aromatic polymer is not based on the heat of fusion of the EP copolymer, but rather on the ethylene content and Brookfield viscosity of the EAO copolymer. In this retard, the present invention describes both a composition comprising monovinylidene aromatic polymer with improved ESCR, and a process for improving the ESCR of a composition comprising a monovinylidene aromatic polymer. The compositions of this invention exhibit improved ESCR. relative to a composition comprising a monovinylidene aromatic polymer without an EAO that is characterized by a

particular mathematical relationship between its ethylene content and Brookfield viscosity.

In one embodiment, the invention is a composition comprising (A) an impact-modified monovinylidene aromatic polymer, and (B) an EAO copolymer that satisfies the mathematical relationship

$$y \leq 20 + 2.35x$$

in which y is the ethylene content in mole percent (mol%) of the EAO copolymer and x is the Brookfield viscosity in centipoise (cP) at 100°C of the EAO copolymer and the viscosity is at least 1, preferably at least 3 and more preferably at least 5, centipoise (cP) (1cP = 1 mPa·s). The monovinylidene aromatic polymer is typically at least one of HIPS and acrylonitrile/butadiene/styrene copolymer (ABS). A test specimen prepared from a composition of this invention and according to the procedure of ISO 527-2 retains more than 50% of its original elongation after ten days exposure to corn oil at 1% strain, or after nine days exposure to corn oil at 0.5% strain, when tested in accordance with the procedure of 180-4599. This is an indication that the composition has a favorable ESCR.

In one embodiment of this invention, the EAO copolymer contains an amount of unsaturation measured in terms of a ratio of vinyl groups to the sum of all unsaturations. This amount is typically at least 0.03, or in percentage terms, at least 3 percent. The amount of EAO copolymer in the compositions is an ESCR-enhancing amount, but typically the amount is between I and 5 percent by weight based upon the combined weight of the monovinylidene aromatic polymer and EAO copolymer.

In another embodiment, the invention is a process of improving the ESCR of an impact-modified monovinylidene aromatic polymer, the process comprising the step of admixing with the impact-modified monovinylidene aromatic polymer an ESCR-enhancing amount of an EAO copolymer that satisfies the mathematical relationship

$$y \leq 20 + 2.35x$$

in which y is the ethylene content in mol% of the EAO copolymer and x is the Brookfield viscosity in cP at 100°C of the EAO copolymer and the viscosity is at least 1, preferably at least 3 and more preferably at least 5, cP. The EAO copolymer can be admixed with the monomers that will form the monovinylidene aromatic polymer either pre-reactor or, more preferably, in-reactor, and in any conventional manner using any conventional equipment. A test specimen prepared from a composition made by the process of this embodiment of the invention and according to the procedure of ISO 527-2 retains more than 50% of its original elongation after ten days exposure to corn oil at 1 % strain, or after nine days exposure to corn oil at 0.5% strain, when tested in accordance with the procedure of ISO-4599. This is an indication that the composition has a favorable ESCR.

Yet another embodiment of the invention is an article made from the composition comprising the monovinylidene aromatic polymer and an ESCR-enhancing amount of an EAO copolymer that satisfies the mathematical relationship

$$y \leq 20 + 2.35x$$

in which y is the ethylene content in mol% of the EAO copolymer and x is the Brookfield viscosity in cP at 144°C of the EAO copolymer and the viscosity is at least 1, preferably at least 3 and more preferably at least 5, cP. A test specimen prepared from the composition used to prepared the article of this embodiment of the invention and according to the procedure of ISO 527-2 retains more than 50% of its original elongation after ten days exposure to corn oil at 1% strain, or after nine days exposure to corn oil at 0.5% strain, when tested in accordance with the procedure of ISO-4599. This is an indication that the composition has a favorable ESCR.

## BRIEF DESCRIPTION OF THE DRAWING

The sole figure is a graph plotting the viscosity (cP at 100°C) against ethylene content (mol%) of the EP copolymers reported in Tables 5A-D.

## DESCRIPTON OF THE FREFERRED EMBODIMENT

The numerical ranges in this disclosure include all values from and including the lower and the upper values,

in increments of one unit, provided that there is a separation of at least two units between any lower value and any higher value. As an example, if a compositional, physical or other property, such as, for example, molecular weight, viscosity, melt index, etc., is from 100 to 1,000, it is intended that all individual values, such as 100, 101, 102, etc., and sub ranges, such as 100 to 144,155 to 170, 197 to 200, etc., are expressly enumerated. For ranges containing values which are less than one or containing fractional numbers greater than one (e.g., 1.1, 1.5, etc.), one unit is considered to be 0.00001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, molecular weight and amount of ethylene in the EAO copolymer, the number of carbon atoms in a comonomer, the amount of unsaturation in the EAO copolymer, the amount of EAO copolymer in the composition, and the various properties of the EAO copolymer and compositions of the invention.

"Polymer" means a polymeric compound prepared by polymerizing monomers, whether of the same or a different type. The generic term polymer thus embraces the term homopolymer, usually employed to refer to polymers prepared from only one type of monomer, and the terms copolymer and interpolymer as defined below.

"Copolymer", "interpolymer" and like terms means a polymer prepared by the polymerization of at least two different types of monomers. These generic terms include the traditional definition of copolymers, i.e., polymers prepared from two different types of monomers, and the more expansive definition of copolymers, i.e., polymers prepared from more than two different types of monomers, e.g., terpolymers, tetrapolymers, etc.

"Blend", "polymer blend" and like terms mean a composition of two or more compounds, typically two or more polymers. Such a blend may or may not be miscible. Such a blend may or may not be phase separated. Such a blend may or may not contain one or more domain configurations, as determined from transmission electron spectroscopy, light scattering, x-ray scattering, or any other method known in the art. In the context of this invention, blend includes the chemical and/or physical coupling of the monovinylidene aromatic polymer with the EAO copolymer, e.g., the latter is grafted onto or otherwise incorporated into the former.

"Composition" and like terms means a mixture or blend of two or more components. One composition of this invention is the mix of monomers, polymerization catalyst and any other components necessary or desirable to make the monovinylidene aromatic polymer, while another composition of this invention is the mix comprising the monovinylidene aromatic polymer, EAO copolymer and any other components, e.g., additives, necessary or desirable to the end use of the composition.

"Article" and like terms mean an object made from a composition of this invention. Articles include, without limitation, film, fiber, molded objects such as appliance and automobile parts, hoses, refrigerator and other liners, clothing and footwear components, and gaskets made by any process, e.g., extrusion, casting, injection molding, blow molding, etc.

"Compatibility agent" and like terms means a compound that is used in combination with a monovinylidene aromatic polymer to improve one or more properties or characteristics of the polymer. For example, mineral oil, polybutene and atactic polypropylene are compatibility agents for HIPS because they improve the ESCR of HIPS. However, not all compatibility agents are alike because while some improve one property, e.g., ESCR, they do so at the expense of another property. Mineral oil, polybutene, atactic polypropylene and others are not compatible with the matrix of HIPS, and thus detract from the aesthetics of the finished product. The low molecular weight EAO copolymers used in the practice of this invention are compatibility agents that improve the ESCR of HIPS and like compounds without the adverse effects of such agents as mineral oil, etc.

"ESCR-enhancing amount" and like terms mean an amount of EAO copolymer that, when blended with a monovinylidene aromatic polymer, imparts to the monovinylidene aromatic polymer an ESCR that is greater than the ESCR of the monovinylidene aromatic polymer without the EAO copolymer, preferably without deterioration of the extrusion processability of the monovinylidene aromatic polymer. Typically, the amount of ESCR enhancement to the monovinylidene aromatic polymer resulting from the addition of the EAO copolymer is at least 0.5, more typically at least 1 and even more typically at least 2, percent greater than the ESCR of the monovinylidene aromatic polymer before it was blended with the EAO copolymer.

ESCR is measured consistent with International Standard ISO-4599. Test specimens are molded consistent with ISO-527. The temperature is 23 $\pm$ 2°C, and the strain is 0.5% or 1.0%. The test environment is corn oil, and an indicative tensile property is measured, e.g., elongation at break. Criterion for failure is that exposed test specimens retain 50% or less of the value obtained for unstrained, unexposed test specimens, e.g., less than 50% of its original elongation. The test procedure is to measure test specimens (bars) before contact with corn oil and without strain. The remaining samples are clamped into a frame with 0.5% or 1.0% strain and dipped or submerged in corn oil. As a function of time, bars are removed from the corn oil, cleaned and the selected tensile property measured.

<u>EAO Copolymer</u>

The EAO copolymers used in the practice of this invention comprise units derived from ethylene and one or

more alpha-olefin (α-olefin) comonomers. Typical alpha-olefin copolymers comprise units of at least one comonomer of 3-20, preferably 3-12 and more preferably 3-8, carbon atoms, such as propylene, 1-butene, 1-pentene, 1-hexene and 1-octene. Representative of the EAO copolymers that can be used in the practice of this invention include the EAO copolymers described in U.S. Patent Application Publication No. 2006/0025640.

Thermal properties are measured using a TA Q1000. Five to eight milligrams of film sample is weighed and placed in a differential scanning calorimetry (DSC) pan. Analysis of this liquid polymer by DSC requires the use of a special encapsulated stainless steel pan. The pan includes a lid, a bottom, and an o-ring. The procedure to weigh a liquid DSC sample includes first taking the tare weight of all three parts of the DSC pan. The 5-8 mg of liquid sample is then placed into the bottom of the pan by use of a pipette. The o-ring is placed into the lid, and then the lid is placed on top of the bottom part of the pan. Lastly, the encapsulated pan is sealed using a pan crimper to squeeze the parts together to ensure that the liquid will not boil out upon heating. The lid is crimped on the pan to ensure a closed atmosphere. The sample pan is placed in a DSC cell, and then heated at a rate of approximately 10°C/min to a temperature of 180°C for a polyethylene sample. The sample is kept at this temperature for three minutes. Then the sample is cooled at a rate of 10°C/min to -90°C, and kept isothermally at that temperature for three minutes. The sample is next heated at a rate of 10°C/min to 150°C until complete melting has occurred (second heat). The heat of fusion is determined from the second heat curve. The percent crystallinity may be calculated with the equation:

$$\text{Percent C} = (A/292\ \text{J/g}) \times 100$$

in which percent C represents is percent crystallinity, and A is the heat of fusion of the measured ethylene-based polymer in Joules per gram (J/g). The melting point and glass transition temperature from the second heat curve and the crystallization point from the cooling curve are determined by using the DSC method previously described.

The EAO copolymers used in the practice of this invention typically have a weight average molecular weight, Mw, of at least 200, preferably of at least 500 and more preferably of at least 1,000, g/mole. The Mw of these EAO copolymers is typically less than 22,000, preferably less than 10,000, more preferably less than 5,000 and even more preferably less than 3,000, g/mole.

The EAO copolymers used in the practice of this invention typically have a number average molecular weight, Mn, of at least 100, preferably of at least 250 and more preferably of at least 500, g/mole. The Mn of these EAO copolymers is typically less than 11,000, preferably less than 5,000, more preferably less than 2,500 and even more preferably less than 1,500, g/mole.

The average molecular weights and molecular weight distributions for ethylene-base polymers are determined with a chromatographic system consisting of either a Polymer Laboratories Model PL-210 or a Polymer Laboratories Model PL-220. The column and carousel compartments are operated at 140°C for polyethylene-based polymers. The columns are three Polymer Laboratories 10-micron, Mixed-B columns. The solvent is 1,2,4 trichlorobenzene. The samples are prepared at a concentration of 0.1 gram of polymer in 50 milliliters of solvent. The solvent used to prepare the samples contains 200 ppm of butylated hydroxytoluene (BHT). Samples are prepared by agitating lightly for 2 hours at 160°C. The injection volume is 100 microliters, and the flow rate is 1.0 milliliters/minute. Calibration of the gel permeation chromatography (GPC) column set is performed with narrow molecular wight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)):

$$M_{polyethylene} = A \times (M_{polystyrene})^{B},$$

in which M is the molecular weight, A has a value of 0.4315 and B is equal to 1.0. Polyethylene equivalent molecular weight calculations are performed using Viscotek TriSEC software Version 3.0. The number average molecular weight ($M_n$) and the weight average molecular weight ($M_w$) (as described in R. J. Young, Introduction to Polymers, Chapman and Hall, New York, p. 5 (1981)) are:

$$M_n = 1/\sum_{i=1}^{\infty} (w_i/M_i)$$

$$M_n = \sum_{i=1}^{\infty} w_i M_i$$

The molecular weight distribution is defined as $M_w/M_n$.

The EAO copolymers used in the practice of this invention satisfy the mathematical relationship $y \leq 20 + 2.35x$ in which y is the ethylene content in mole percent (mol%) of the EAO copolymer and x is the Brookfield viscosity in centipoise (cP) at 100°C of the EAO copolymer. Typically, the ethylene content of the EAO copolymers is at least 5, preferably at least 20 and more preferably at least 30, mol%. As a general maximum, the EAO copolymers used in the practice of this invention comprise less than 85, preferably less than 80 and more preferably less than 75, mol% ethylene. Typically, the EAO copolymers used in the practice of this invention comprise at least 15, preferably at least 25 and more preferably at least 30, mol% comonomer, preferably propylene.

The ethylene and comonomer content of the EAO copolymer can be determined by $^{13}C$ Nuclear Magnetic Resonance (NMR). In this procedure, samples are prepared by adding approximately 3g of a 50/50 by weight mixture of tetrachloroethane-d2/orthodichlorobenzene that is 0.025M (molar) in chromium acetylacetonate (relaxation agent) to 0.4g sample in a 10mm NMR tube. The samples are dissolved and homogenized by heating the tube and its contents to 150°C. The data is collected using a Bruker Dual DUL high-temperature CryoProbe spectrometer, corresponding to a $^{13}C$ resonance frequency of 100.5 megahertz (MHz). Acquisition parameters are selected to ensure quantitative $^{13}C$ data acquisition in the presence of the relaxation agent. The data acquisition is carried out at 125°C using 160 transients per data file, a 6-second pulse repetition delay, a spectral width of 25,000 Hz and a file size of 32K data points. Some parameters may vary in order to achieve a good signal to noise ratio, e.g., 10:1 for quantitated peaks.

In one embodiment, the EAO copolymers contain unsaturation, typically and preferably vinylidene unsaturation. These copolymers will contain a level ofvinylidene unsaturation in a ratio of vinyl groups to the sum of all unsaturations of typically at least 0.005, preferably at least 0.0075 and more preferably at least 0.01 or, in percentage terms, of at least 0.5%, preferably at least 0.75% and more preferably at least 1%.

The unsaturation of the low molecular weight EAO copolymers of this embodiment can result from either the process from which the EAO copolymer is made or by other means, e.g., partial dehydrogenation of the copolymer, or the incorporation of one or more dienes, typically nonconjugated dienes, into the backbone of the copolymer. For example, EAO copolymers prepared by constrained geometry catalysis typically contain unsaturation reflected in a ratio of terminal vinyl groups to the sum of all unsaturations of typically at least 0.03 or, in percentage terms, of at least 3 percent. Representative nonconjugated dienes include but are not limited to 1,7-octadiene, 1,9-decadiene, 1,11-dodecadiene, 1,13-tetradecadiene, 7-methyl-1,6-octadiene, and 9-methyl-1,8-decadiene. Additional representative dienes are described in US Patent 6,335,410.

Proton Nuclear Magnetic Resonance ($^1H$ NMR) spectroscopy is used to determine the end group structure of the EAO copolymer. Samples are prepared by adding approximately 10 mg of copolymer to 0.5 ml of solvent in a 5 mm NMR tube. The solvent is a 50/50 by weight mixture of 1,1,2,2-tetrachloroethane-$d_2$ (TCE) and perchloroethylene. The samples are dissolved and homogenized by heating and vortexing the tube, and its contents, at 115-120°C. The data is typically collected using a Varian INOVA 500MHz NMR spectrometer. A standard $^1H$ NMR spectrum is collected to give the ratio of the "whole" polymer (integral 3.0 - 0.5 ppm) relative to the TCE-$d_2$ (which is normalized to 100 integral units). Acquisition parameters for the standard $^1H$ NMR spectrum include 40 transients per data file, 1.6 second acquisition time, 29 second relaxation delay, spectral width of 10,000 Hz, file size of 32K data points, and temperature setpoint of 115°C. A second experiment uses a pre-saturation pulse to suppress the main chain protons from the "whole" polymer. The unsaturated end groups are then integrated relative to the TCE-$d_2$ (which is normalized to 100 integral units). The acquisition parameters used for the pre-saturation experiment include 200 transients per data file, 1.6 second acquisition time, 25 second relaxation delay, spectral width of 10,000 Hz, file size of 32K data points, temperature setpoint of 115°C, and saturation delay 4.0 seconds. The number of transients can be increased in order to achieve adequate signal to noise ratio, e.g., 10: for quantitated peaks.

The percent of the vinyl groups to the sum of all of the unsaturations, % $R_v$, is defined below. % $R_v$ is determined using $^1H$ NMR spectroscopy. The % $R_v$ value is defined as:

$$\% R_v = ([vinyl]/([vinyl] + [vinylidene] + [cis] + [trans] + [tri\text{-}substituted]))*100$$

in which [vinyl] is the mol% vinyl groups in the isolated polymer; [vinylidene], [cis], [trans], and [tri-substituted] are the concentration of vinylidene, cis, trans, and tri-substituted groups in the isolated polymer in mol%, respectively. The

amount of each unsaturation and the amount of backbone CH, $CH_2$, and $CH_3$ from the "whole" polymer can be determined from the peak integration of each respective peak, as known in the art. Each integral is normalized to the 1,1,2,2,-tetrachloroethane-d2 region.

The moles of each end group are determined by integrating each signal corresponding to the various unsaturated end groups plus the backbone. The solvent is used to normalize the pre-saturation and non-pre-saturation spectra. The moles of backbone as CH, $CH_2$, and $CH_3$ from the "whole" polymer are quantified using the non-pre-saturation experiment and the moles of end group are quantified using the pre-saturation experiment.

The EAO copolymers also typically have a density of less than 0.89, preferably less than 0.88 and more preferably less than 0.87, grams per cubic centimeter (g/cc). Density is determined in accordance with American Society for Testing and Materials (ASTM) procedure ASTM D7042.

The EAO copolymers also have a Brookfield (also known as a melt) viscosity at 100°C of less than 10,000, preferably less than 5,000 and more preferably less than 1,000, centipoise (cP) as determined by ASTM D-3236. Brookfield viscosity is determined in accordance with the following procedure, using a Brookfield Laboratories DVII+ Viscometer and disposable aluminum sample chambers. Spindle 18 is used for measuring viscosities; Spindle SC-31 may also be used if the measured viscosity is within the range for which the spindle is specified. The sample is poured into the chamber which is, in turn, inserted into a Brookfield Thermosel and locked into place. The sample chamber has a notch on the bottom that fits the bottom of the Brookfield Thermosel to ensure that the chamber is not allowed to turn when the spindle is inserted and spun. The sample is heated to the required temperature until the melted sample is about 1 inch (2.5 cm) (approximately 8 grams of resin) below the top of the sample chamber. The viscometer apparatus is lowered and the spindle submerged into the sample chamber. Lowering is continued until brackets on the viscometer align on the Thermosel. The viscometer is turned on and set to operate at a shear rate which leads to a torque reading in the range of 30 to 60 percent. Readings are taken every minute for about 15 minutes, or until the values stabilize, at which point a final reading is recorded.

The EAO copolymers of this invention typically have a pour point of less than 50, preferably less than 20 and more preferably less than 0, °C as determined by ASTM D-97.

The EAO copolymers, particularly the EP copolymers, of this invention can be produced using conventional olefin polymerization technology, e.g., metallocene, post-metallocene or constrained geometry catalysis. Preferably, the EAO copolymer is made using a mono- or bis-cyclopentadienyl, indenyl, or fluorenyl transition metal (preferably Group 4) catalysts or constrained geometry catalysts (CGC) in combination with an activator, in a solution, slurry, or gas phase polymerization process. The catalyst is preferably mono-cyclopentadienyl, mono-indenyl or mono-fluorenyl CGC with various substituents on the ring. The solution process is preferred. US Patents 5,064,802, 5,721,185 and 6,335,410, and WO93/19104 and WO95/00526 disclose constrained geometry metal complexes and methods for their preparation and use. Variously substituted indenyl containing metal complexes are taught in WO95/14024, WO98/49212 and WO2004/031250.

In general, polymerization can be accomplished at conditions well known in the art for metallocene or CGC type polymerization reactions, that is, at temperatures from 0-250C, preferably 30-200C, and pressures from atmospheric to 10,000 atmospheres (1013 megaPascal (MPa)). Suspension, solution, slurry, gas phase, solid state powder polymerization or other process conditions may be employed if desired. The catalyst can be supported or unsupported, and the composition of the support can vary widely. Silica, alumina or a polymer (especially poly(tetralluoroethylcne) or a polyolefin) are representative supports, and desirably a support is employed when the catalyst is used in a gas phase polymerization process. The support is preferably employed in an amount sufficient to provide a weight ratio of catalyst (based on metal) to support within a range of from 1:1.00,000 to 1:10, more preferably from 1:50,000 to 1:20, and most preferably from 1:10,000 to 1:30. In most polymerization reactions, the molar ratio of catalyst to polymerizable compounds employed is from $10^{-12}$:1 to $10^{-1}$:1, more preferably from $10^{-9}$:1 to $10^{-5}$:1.

Inert liquids serve as suitable solvents for polymerization. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof perfluorinated hydrocarbons such as perfluorinated $C_{4-10}$ alkanes; and aromatic and alkyl-substituted aromatic compounds such as benzene, toluene, xylene, and ethylbenzene.

The EAO copolymers of this invention can be used alone or in combination with one or more other olefinic copolymers, e.g., a blend of olefinic copolymers that differ from one another by ethylene content, catalytic method of preparation, etc. If the EAO copolymer is a blend of two or more EAO copolymers one or more of which contain unsaturation, then the blend will contain unsaturation reflected in a ratio of terminal vinyl groups to the sum of all unsaturations of typically at least 0.03 or, in percentage terms, of at least 3%. The EAO copolymers can be blended by any in-reactor or post-reactor process. The in-reactor blending processes are preferred to the post-reactor blending processes, and the processes using multiple reactors connected in series are the preferred in-reactor blending processes. These reactors can be charged with the same catalyst but operated at different conditions, e.g., different reactant concentrations, temperatures, pressures, etc, or operated at the same conditions but charged with different catalysts.

The EAO copolymer is present in the composition of the invention in an ESCR-enhancing amount. Typically, this amount is at least 0.1, preferably at least 0.3, more preferably at least 1 and even more preferably at least 2, weight percent (wt%) based on the combined weight of the monovinylidene aromatic polymer and the EAO copolymer. The maximum amount of EAO copolymer in the composition can vary widely and is more a function of economics and diminishing returns than anything else but as a practical matter, the maximum amount is typically not in excess of 10, more typically not in excess of 7 and even more typically not in excess of 5, wt% based on the combined weight of the monovinylidene aromatic polymer and the EAO copolymer.

Monovinylidene Aromatic Polymers

Monovinylidene aromatic homopolymers and copolymers (individually and collectively referred to as "polymers" or "copolymers") are produced by polymerizing monovinylidene aromatic monomers such as those described in US Patents 4,666,987, 4,572,819 and 4,585,825. The monovinylidene aromatic monomers suitable for producing the polymers and copolymers used in the practice of this invention are preferably of the following formula:

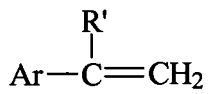

in which R' is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl (in which the alkyl group of the phenyl ring contains 1 to 10, preferably 1 to 8 and more preferably 1 to 4, carbon atoms), with phenyl being most preferred. Typical monovinylidene aromatic monomers which can be used include: styrene, alpha-methylstyrene, all isomers of vinyl toluene, especially para-vinyltoluene, all isomers of ethyl styrene, propyl styrene, vinyl biphenyl, vinyl naphthalene, and vinyl anthracene, and mixtures thereof with styrene being the most preferred.

The monovinylidene aromatic monomer can be copolymerized with one or more of a range of other copolymerizable monomers. Preferred comonomers include nitrile monomers such as acrylonitrile, methacrylonitrile and fumaronitrile; (meth)acrylate monomers such as methyl methacrylate or n-butyl acrylate; maleic anhydride and/or N-aryl maleimides such as N-phenylmaleimide, and conjugated and nonconjugated dienes. Representative copolymers include styrene-acrylonitrile (SAN) copolymers. The copolymers typically contain at least 1, preferably at least 2 and more preferably at least 5, wt % of units derived from the comonomer based on weight of the copolymer. Typically, the maximum amount of units derived from the comonomer is 40, preferably 35 and more preferably 30, wt % based on the weight of the copolymer. These homopolymers or copolymers can be blended or grafted with one or more elastomeric polymers to produce such products as high impact polystyrene (HIPS) and acrylonitrile-butadiene-styrene (ABS) rubber.

The weight average molecular weight (Mw) of the monovinylidene aromatic polymers used in the practice of this invention can vary widely. For reasons of mechanical strength, among others, typically the Mw is at least 100,000, preferably at least 120,000, more preferably at least 130,000 and most preferably at least 140,000 g/mol. For reasons of processability, among others, typically the Mw is less than or equal to 400,000, preferably less than or equal to 350,000, more preferably less than or equal to 300,000 and most preferably less than or equal to 250,000 g/mol. The plasticizer blends of this invention are particularly well suited for plasticizing monovinylidene aromatic polymers with a Mw above 250,000, or above 300,000, or above 350,000. For monovinylidene aromatic polymers of these high Mw, the plasticizer blends of this invention are preferably added to the monomers and/or rubber from which the monovinylidene aromatic polymer is made.

Similar to the Mw, the number average molecular weight (Mn) of the monovinylidene aromatic polymers used in the practice of this invention can also vary widely. Again for reasons of mechanical strength, among others, typically the Mn is at least 30,000, preferably at least 40,000, more preferably at least 50,000 and most preferably at least 60,000 g/mol. Also for reasons of processability, among others, typically the Mn is less than or equal to 130,000, preferably less than or equal to 120,000, more preferably less than or equal to 110,000 and most preferably less than or equal to 100,000 g/mol.

Along with the Mw and Mn values, the ratio of Mw/Mn, also known as polydispersity or molecular weight distribution, can vary widely. Typically, this ratio is at least 2, and preferably greater than or equal to 2.3. The ratio typically is less than or equal to 4, and preferably less than or equal to 3. The Mw and Mn are typically determined by gel permeation chromatography using a polystyrene standard for calibration.

The rubber suitable for use in the present invention can be any unsaturated rubbery polymer having a glass transition temperature (Tg) of not higher than 0°C, preferably not higher than -20°C, as determined by ASTM D-756-52T. Tg is the temperature or temperature range at which a polymeric material shows an abrupt change in its physical properties, including, for example, mechanical strength. Tg can be determined by differential scanning calorimetry (DSC).

The rubbers suitable for use in the present invention are those that have a solution viscosity in the range of 5

to 300 cP (5 percent by weight styrene at 20°C) and Mooney viscosity of 5 to 100 (ML+1, 100°C). Suitable rubbers include, but are not limited to, diene rubbers, diene block rubbers, butyl rubbers, ethylene propylene rubbers, ethylene-propylenediene monomer (EPDM) rubbers, ethylene copolymer rubbers, acrylate rubbers, polyisoprene rubbers, halogen-containing rubbers, silicone rubbers and mixtures of two or more of these rubbers. Also suitable are interpolymers of rubber-forming monomers with other copolymerizable monomers. Suitable diene rubbers include, but are not limited to, conjugated 1,3-dienes, for example, butadiene, isoprene, piperylene, chloroprene, or mixtures of two or more of these dienes. Suitable rubbers also include homopolymers of conjugated 1,3-dienes and interpolymers of conjugated 1,3-dienes with one or more copolymerizable monoethylenically unsaturated monomers, for example, copolymers of isobutylene and isoprene.

Preferred rubbers are diene rubbers such as polybutadiene, polyisoprene, polypiperylene, and polychloroprene, or mixtures of diene rubbers, i.e., any rubbery polymers of one or more conjugated 1,3-dienes, with 1,3-butadiene being especially preferred. Such rubbers include homopolymers and copolymers of 1,3-butadiene with one or more copolymerizable monomers, such as monovinylidene aromatic monomers as described above, styrene being preferred. Preferred copolymers of 1,3-butadiene are block or tapered block rubbers of at least 30, more preferably at least 50, even more preferably at least 70, and still more preferably at least 90, wt % 1,3-butadiene rubber, and preferably up to 70, more preferably up to 50, even more preferably up to 30, and still more preferably up to 10, wt % monovinylidene aromatic monomer, all weights based on the weight of the 1,3-butadiene copolymer.

The rubber in the rubber-modified polymers of this invention is typically present in an amount equal to or less than 40, preferably equal to or less than 25, more preferably equal to or less than 20, even more preferably equal to or less than 15, and most preferably equal to or less than 10 wt % based on the weight of the rubber-modified polymer. Typically, HIPS products contain less rubber than ABS products.

Fillers and Additives

The compositions of this invention can further comprise one or more fillers and/or additives. These materials are added in known amounts using conventional equipment and techniques. Representative fillers include talc, calcium carbonate, organo-clay, glass fibers, marble dust, cement dust, feldspar, silica or glass, fumed silica, silicates, alumina, various phosphorus compounds, ammonium bromide, antimony trioxide, antimony trioxide, zinc oxide, zinc borate, barium sulfate, silicones, aluminum silicate, calcium silicate, titanium oxides, glass microspheres, chalk, mica, clays, wollastonite, ammonium octamolybdate, intumescent compounds, and expandable graphite, and mixtures of two or more of these materials. The fillers may carry or contain various surface coatings or treatments, such as silanes, and fatty acids.

Still other additives include flame retardants such as the halogenated organic compounds. The composition can also contain additives such as, for example, antioxidants (e.g., hindered phenols such as, for example, IRGANOX™ 1076 a registered trademark of Ciba Specialty Chemicals), mold release agents, processing aids (such as oils, organic acids such as stearic acid, metal salts of organic acids), colorants or pigments to the extent that they do not interfere with desired loadings and/or physical or mechanical properties of the compositions of the present invention.

Other Polymers

The compositions of this invention can comprise polymers other than the monovinylidene aromatic polymers and the low molecular weight EAO copolymers. Representative other polymers include, but are not limited to, ethylene polymer (e.g., low density polyethylene (LDPE), ultra low density polyethylene (ULDPE), medium density polyethylene (MDPE), linear low density polyethylene (LLDPE), high density polyethylene (HDPE), homogeneously branched linear ethylene polymer, substantially linear ethylene polymer, graft-modified ethylene polymers, ethylene vinyl acetate interpolymer, ethylene acrylic acid interpolymer, ethylene ethyl acetate interpolymer, ethylene methacrylic acid interpolymer, and ethylene methacrylic acid ionomer), conventional polypropylene (e.g., homopolymer polypropylene, polypropylene copolymer, and random block polypropylene interpolymer), polyether block copolymer (e.g., PEBAX), polyphenylene ether, copolyester polymer, polyester/polyether block polymers (e.g., HYTEL), ethylene carbon monoxide interpolymer (e.g., ethylene/carbon monoxide (ECO), copolymer, ethylene/acrylic acid/carbon monoxide (EAACO) terpolymer, ethylene/methacrylic acid/carbon monoxide (EMAACO) terpolymer, ethylene/vinyl acetate/carbon monoxide (EVACO) terpolymer and styrene/carbon monoxide (SCO)), polyethylene terephthalate (PET), chlorinated polyethylene, styrene-butadiene-styrene (SBS) interpolymer, styrene-ethylene-butadiene-styrene (SEBS) interpolymer, and mixtures of two or more of these other polymers. The polyolefins that can comprise one or more of the other polymers include both high and low molecular weight polyolefins, and saturated and unsaturated polyolefins. If the composition comprises one or more other polymers, then the other polymers typically comprise no more than 50, preferably no more than 25 and more preferably no more than 10, wt % of the total weight of the composition.

Articles of Manufacture

The compositions of this invention are used in refrigerator and other liners and food and other packaging construction in the same manner as known compositions. In addition to these manufactures, the compositions of this invention can be used in the manufacture of such articles as, but not limited to, gaskets, apparel, footwear, hoses and tubing, and components for consumer electronics and appliances. These compositions are used in the same manner

as know compositions of monovinylidene aromatic polymers and mineral oil, e.g., extrusion, molding, thermoforming, etc.

The following examples illustrate various embodiments of this invention. All parts and percentages are by weight unless otherwise indicated.

## SPECIFIC EMBODIMENTS

Materials:

The EP copolymer used in Example 1 has a Brookfield viscosity (spindle 18) at 100°C of 20 cP (20 mPa.s), no melting peak or crystallization above room temperature (25°C by DSC), a percent crystallinity of 2%, a pour point of -17°C, an Mw of 800 g/mol, an Mn of 440 g/mol, 49.5 wt% or 59.5 mol% ethylene, 50.5 wt% or 40.5 mol% propylene (by $^{13}C$ NMR), containing a % Rv of 45.98 (by $^{1}H$ NMR), a ratio of vinyl groups to the sum of all unsaturations (multiplied by 100), and a density of 0.816 g/cc. Pour point is measured by ASTM D-97.

The EP copolymer used in Example 1 is prepared in a 1-gallon (3.8 1), oil jacketed, autoclave continuously stirred tank reactor (CSTR). A magnetically coupled agitator with Lightning A-320 impellers provides the mixing. The reactor runs liquid full at 525 psig (3,620 kPa). Process flow is in at the bottom and out of the top. Heat transfer oil is circulated through the jacket of the reactor to remove some of the heat of reaction. At the exit of the reactor is a Micro-Motion$^{tm}$ flow meter that measures flow and solution density. All lines on the exit of the reactor are traced with 50 psi (344.7 kPa) steam and insulated.

ISOPAR-E solvent and comonomer are supplied to the reactor at 30 psig (207 kPa) pressure. The solvent feed to the reactors is measured by a Micro-Motion$^{tm}$ mass flow meter. A variable speed diaphragm pump controls the solvent flow rate and increases the solvent pressure to reactor pressure. The comonomer is metered by a Micro-Motion$^{tm}$ mass flow meter and flow controlled by a Research control valve. The propylene stream is mixed with the solvent stream at the suction of the solvent pump and is pumped to the reactor with the solvent. The remaining solvent is combined with ethylene and (optionally) hydrogen and delivered to the reactor. The ethylene stream is measured by a Micro-Motion$^{tm}$ mass flow meter just prior to the Research valve controlling flow. Three Brooks flow meter/controllers (100 sccm, 500 sccm and 1000 sccm) are used to deliver hydrogen into the ethylene stream at the outlet of the ethylene control valve.

The ethylene or ethylene/hydrogen mixture combines with the solvent/comonomer stream at ambient temperature. The temperature of the solvent/monomer as it enters the reactor is controlled with two heat exchangers. This stream enters the bottom of the 1-gallon (3.8 1) CSTR. The three component catalyst system and its solvent flush also enter the reactor at the bottom but through a different port than the monomer stream. Any constrained geometry catalyst can be used such as those described in US Patent 5,721,185, particularly the catalyst described in Example 105. The cocatalyst can be a borate such as methylbis(hydrogenated tallow alkyl) ammonium tetrakis(pentaborate) as described in Example 2 of US Patent 5,919,983. The activator can be a modified methylalumoxane such as MMAO-3A available from Akzo Nobel.

Polymerization is stopped with the addition of catalyst kill into the reactor product line after meter-measuring the solution density. Other polymer additives can be added with the catalyst kill. The reactor effluent stream then enters a post-reactor heater that provides additional energy for the solvent removal flash. This flash occurs as the effluent exits the post reactor heater and the pressure is dropped from 475 psig (3275 kPa) down to 1 psig (6.9 kPa) at the reactor pressure control valve. This flashed polymer enters a hot-oil jacketed devolatilizer. Approximately 90% of the volatiles are removed from the polymer in the devolatilizer. The volatiles exit the top of the devolatilizer. Volatiles going overhead out of the devolatilizer are condensed with a glycol exchanger. The remaining stream is condensed and chilled with a water-jacketed exchanger and then enters a glycol-jacketed solvent/ethylene separation vessel. Solvent is removed from the bottom of the vessel and ethylene vents from the top. The ethylene stream is measured with a Micro-Motion$^{tm}$ mass flow meter. This measurement of unreacted ethylene is used to calculate the ethylene conversion. The polymer separates in the devolatilizer and is pumped out with a gear pump. No antioxidant package or other additives are injected in to the polymer, only 35 ppm deionized water for the catalyst kill.

Typical process parameters are a reactor temperature of 135°C; solvent, ethylene and propylene flow of 15, 1.55 and 2.72 pounds (6.8, 0.7 and 1.23 kg) per hour, respectively; and a hydrogen flow of 4900 standard cubic centimeters per minute. The boron/titanium molar ratio in the catalyst is typically about 1.2, and the MMAO/titanium molar ratio is typically about 5. Under these conditions, the propylene conversion is typically about 70%.

The technical grade corn oil is used in the test to measure ESCR.

Sample Preparation:

The sample compositions are produced in a continuous process using three agitated reactors working in series. The rubber feed solution, EP copolymer or mineral oil (Drakeol$^{tm}$ 600 from Prenntico), ethyl benzene (EB), styrene and the remainder of the additives (i.e., peroxide initiator and chain transfer agent) are supplied to the first reactor. The antioxidant is added later in the reaction. The feed compositions are reported in Table 1A (styrene constitutes the balance of the feed). The EP copolymer comprises 59.5 mol% ethylene and 40.5 mol% propylene, and it has a Brookfield viscosity of 20 cP. This combination of ethylene content and Brookfield viscosity satisfies the mathematical relationship of $y \leq 20$

+ 2.35x. The unsaturation profile of the EP copolymer is reported in Table 1B. The peroxide initiator is Trigonox[tm] 22 (1,1-di(tert-butylperoxy)cyclohexane) available from Akzo-Nobel, and the chain transfer agent is n-dodecyl mercaptan. The composition of the final polymer is calculated based on the feed composition and conversion during polymerization.

Table 1 A

| Sample Feed Compositions | | |
|---|---|---|
| **Feed Composition** | **Example 1** | **Comparative Example 1** |
| **% Rubber** | 6 | 6 |
| **%EB** | 6 | 6 |
| **% EP Copolymer** | 4 | 0 |
| **% Mineral Oil** | 0 | 3.2 |
| **% Irganox 1076** | 0.1 | 0.1 |
| **Peroxide Initiator (ppm)** | 80 | 80 |
| **Chain Transfer Agent (ppm)** | 300 | 300 |

Table 1B

| EP Copolymer Unsaturation Profile | | | | | |
|---|---|---|---|---|---|
| | **Mole% Vinyl** | **Mole % Cis and Trans** | **Mole% Tri-substituted Cis and Trans** | **Mole% Vinylidene** | **%Vinyl/ Total Unsaturation ($R_v$)** |
| Ex.-1 | 0.0317 | 0.0015 | 0 | 0.0357 | 45.98 |

The polymerization is continued until 80% solids are reached. Residual styrene and ethylbenzene diluent are flashed and the rubber is crosslinked in a devolatilizing extruder. The samples are extruded through a die and are cut in pellets.

Sample Testing:

The test methods used to characterize the samples are described in Table 2.

Table 2

| Test Methods | |
|---|---|
| MFR | ISO-1133 Condition G (200°C/5kg) |
| PSMatrix MWD | GPC using narrow molecular weight polystyrene standards |
| Rubber Particle Size (RPS) | Multisizer Coulter Counter |
| Tensile Yield | ISO-527-2 |
| Tensile Elongation | ISO 527-2 |
| Tensile Modulus | ISO 527-2 |
| Tensile Rupture | ISO 527-2 |
| Notched Izod Impact Resistance | ASTM-D-256 |
| Vicat Softening Temperature (120 °C/min) | ASTM- D-1525 (120°C/min) |
| ESCR | ISO 4599 |

Test Results:

The Tables 3 and 4 report the beneficial results of adding a low molecular weight EAO copolymer to a monovinylidene aromatic polymer. Example 1 shows both improved ESCR as suggested by the improved elongation at break values and a higher IZOD value.

Table 3

| Sample Mechanical Properties | | |
|---|---|---|
| Test | Example 1 | Comparative Example 1 |
| RPS (Micron). | 3.9 | 3.45 |
| Mw (g/mol) | 166,000 | 174,000 |
| Rubber Content (%) | 7.5 | 7.5 |
| Additive | EP Copolymer | Mineral Oil |
| VICAT (°C) | 101 | 99 |
| IZOD (J/m) | 170 | 1.28 |
| MFR (g/10 min) | 3.44 | 4.47 |

Table 4

| Elongation at Break at 0.5% Strain with Corn Oil Exposure | | | | | | |
|---|---|---|---|---|---|---|
| | **Day*** | **Tensile Yield (MPa)** | **Tensile Rupture (MPa)** | **Elongation at Break (%)** | **Percentage Of Original Elongation At Break (%)** | **Tensile Modulus (MPa)** |
| **Ex. 1** | 0 | 16 | 18 | 50 | n/a | 1833 |
| Comp. Ex. 1 | 0 | 16 | 21 | 54 | n/a | 1817 |
| | | | | | | |
| **Ex. 1** | | 16 | 17 | 50 | 100 | 1804 |
| Comp. Ex. 1 | 1 | 16 | 18 | 29 | 54 | 1794 |
| | | | | | | |
| **Ex. 1** | 4 | 16 | 18 | 50 | 100 | 1809 |
| Comp. Ex. 1 | 4 | 16 | 18 | 29 | 54 | 1836 |
| | | | | | | |
| **Ex. 1** | 9 | 16 | 18 | 49 | 98 | 1839 |
| Comp. Ex. 1 | 9 | 16 | 18 | 26 | 48 | 1827 |

*For day zero, no strain.

After four and nine days, the tensile bars of Example 1 exhibit near 100% retention of elongation at break, while the sample of Comparative Example 1 retains less than 50% of the original elongation.

Examples 2-6 and Comparative Example 2:

Six different EP copolymers are evaluated as blend components for HIPS. Each is added in-reactor to the HIPS at a level of 3 wt% in the feed to the reactor. The EP copolymer and the composition properties are reported in Tables 5A-D.

Table 5A

| EP Copolymer Properties of Compositions of HIPS and 3 wt% EP Copolymer | | | | | | |
|---|---|---|---|---|---|---|
| | **Brookfield Viscosity@100°C (cP)** | **Mw (g/mole)** | **Mn (g/mole)** | **Tg (°C)** | **Heat of Fusion (J/g)** | **Crystallinity (%)** |
| CE-2 | 20 | 872 | 456 | -80 | 26 | 9 |
| Ex. 2 | 42 | 1,328 | 626 | -75 | 32 | 11 |
| Ex. 3 | 81 | 1,881 | 813 | -73 | 33 | 11 |
| Ex. 4 | 20 | 848 | 451 | -80 | 2 | 0:8 |
| Ex. 5 | 38 | 1,193 | 590 | -75 | 1 | 0.3 |
| Ex. 6 | 102 | 2,050 | 891 | -74 | 2 | 0.8 |

Table 5B

| Ethylene and Propylene Content of EP Copolymer in Compositions of HIPS and 3 wt% EP Copolymer | | | | |
|---|---|---|---|---|
| | **Ethylene (wt%)** | **Ethylene (mol%)** | **Propylene (wt%)** | **Propylene (mol%)** |
| CE-2 | 63.7 | 72.5 | 36.3 | 27.5 |
| Ex. 2 | 64.2 | 72.9 | 35.8 | 27.1 |
| Ex. 3 | 63.4 | 72.2 | 36.6 | 27.8 |
| Ex. 4 | 46.2 | 56.3 | 53.8 | 43.7 |
| Ex. 5 | 42.2 | 52.3 | 57.8 | 47.7 |
| Ex. 6 | 46.2 | 56.3 | 53.8 | 43.7 |

Table 5C

| Elongation at Break with Corn Oil Exposure For Compositions Of HIPS and 3 wt% EP Copolymer | | | |
|---|---|---|---|
| | **Elongation At Break Without Strain 0 days (%)** | **Elongation At Break After 10 days At 1% Strain** | **Percentage Of Original Elongation At Break (%)** |
| CE-2 | 47 | 3 | 6 |
| Ex. 2 | 48 | 36 | 75 |
| Ex. 3 | 49 | 36 | 73 |
| Ex. 4 | 53 | 47 | 89 |
| Ex. 5 | 52 | 44 | 85 |
| Ex. 6 | 50 | 37 | 74 |

Table 5D

| EP Copolymer Unsaturation Profiles | | | | | |
|---|---|---|---|---|---|
| | **Mole% Vinyl** | **Mole% Cis and Trans** | **Mole% Tri-substituted Cis and Trans** | **Mole% Vinylidene** | **%Vinyl/ Total Unsaturation ($R_v$)** |
| CE-2 | 0.0382 | 0.0009 | 0 | 0.0601 | 38.55 |
| Ex. 2 | 0.0441 | 0.0013 | 0 | 0.0682 | 38.81 |

(continued)

| EP Copolymer Unsaturation Profiles | | | | | |
|---|---|---|---|---|---|
| | **Mole% Vinyl** | **Mole% Cis and Trans** | **Mole% Tri-substituted Cis and Trans** | **Mole% Vinylidene** | **%Vinyl/ Total Unsaturation ($R_v$)** |
| Ex. 3 | 0.0159 | 0.0006 | 0.0028 | 0.0243 | 36.41 |
| Ex. 4 | 0.0418 | 0.0016 | 0 | 0.0600 | 40.42 |
| Ex. 5 | 0.0583 | 0.0026 | 0 | 0.0790 | 41.69 |
| Ex. 6 | 0.0508 | 0.0029 | 0.0025 | 0.0628 | 42.72 |

The Figure shows graphically the relationship between the viscosity of EP copolymers and their ethylene content. Comparative Example 2 (CE-2) has the same Brookfield viscosity (20 cP) as Ex. 4 but differs markedly in ethylene content (72.5 vs. 56.3 mol%, respectively) and this, in turn, results in the percentage of original elongation at break increasing from only 6% to 89% after 10 days, respectively. The Figure shows that the CE-2 data point is left of the line while all of the remaining data points are right of the line.

Although the invention has been described in considerable detail, this detail is for the purpose of illustration and is not to be construed as a limitation on the scope of the invention as defined in the following claims.

**Claims**

1. A composition comprising (A) an impact-modified monovinylidene aromatic polymer, and (B) an ethylene/alpha-olefin (EAO) copolymer that satisfies the mathematical relationship

$$y \leq 20 + 2.35x$$

in which y is the ethylene content in more percent (mol%) of the EAO copolymer, and x is the Brookfield viscosity in centipoise (cP) at 100°C of the EAO copolymer and the viscosity is at least 1 cP.

2. A composition of Claim 1 in which the EAO copolymer has an ethylene content of at least 5 mol% and not in excess of 85 mol%.

3. A composition of Claim 1 or Claim 2 in which the EAO copolymer has a viscosity not in excess of 1,000 cP at 100°C.

4. A composition of any one of the preceding claims in which the impact-modified monovinylidene aromatic polymer is at least one of high impact polystyrene (HIPS) and acrylonitrile/butadiene/-styrene (ABS).

5. A composition of any one of the preceding claims in which the EAO copolymer is an ethylene/propylene (EP) copolymer.

6. A composition of any one of the preceding claims in which the EAO contains a level of unsaturation reflected in a ratio of vinyl groups to the sum of all unsaturations in the copolymer of at least 0.03.

7. A composition of any one of the preceding claims in which the EAO is present in an amount of at least 1 weight percent based on the combined weight of the impact-modified monovinylidene aromatic polymer and the EAO copolymer.

8. A composition of Claim 7 wherein said amount of EAO is 1 to 5 weight percent based upon the combined weight of the impact-modified monovinylidene aromatic polymer and EAO copolymer.

9. A composition of any one of the preceding claims further comprising a polymer other than the impact-modified monovinylidene aromatic polymer and the EAO copolymer.

**10.** A composition of Claim 9 in which the other polymer is at least one of low density polyethylene, ultra low density polyethylene, medium density polyethylene, linear low density polyethylene, high density polyethylene, homogeneously branched linear ethylene polymer, substantially linear ethylene polymer, graft-modified ethylene polymers, ethylene vinyl acetate interpolymer, ethylene acrylic acid interpolymer, ethylene ethyl acetate interpolymer, ethylene methacrylic acid interpolymer, ethylene methacrylic acid ionomer, homopolymer polypropylene, polypropylene copolymer, random block polypropylene interpolymer, polyether block copolymer, copolyester polymer, polyphenylene ether, polyester/polyether block polymers, ethylene carbon monoxide interpolymer, polyethylene terephthalate, chlorinated polyethylene, styrene-butadiene-styrene (SBS) interpolymer, styrene-ethylene-butadiene-styrene (SEBS) interpolymer, and mixtures of two or more of these other polymers.

**11.** A process of improving the ESCR of an impact-modified monovinylidene aromatic polymer, the process comprising the step of admixing with the impact-modified monovinylidene aromatic polymer an ESCR-enhancing amount of an EAO copolymer that satisfies the mathematical relationship

$$y \leq 20 + 2.35x$$

in which y is the ethylene content in mol% of the EAO copolymer and x is the Brookfield viscosity in cP at 100°C of the EAO copolymer and the viscosity is at least 1 cP.

**12.** A process of Claim 11 in which the EAO copolymer is admixed with the impact-modified monovinylidene aromatic polymer prior to or at the time the polymer is prepared by polymerization of its constituent monomers.

**13.** A process of Claim 11 or Claim 12 in which the impact-modified monovinylidene aromatic polymer and/or the EAO copolymer is as defined in any one of Claims 2 to 8.

**14.** An article comprising the composition of any one of Claims 1 to 10.

**15.** A article of Claim 14 in the form of a refrigerator liner or package.

**Patentansprüche**

**1.** Zusammensetzung, die (A) ein schlagzäh modifiziertes aromatisches Monovinylidenpolymer und (B) Ethylen/α-Olefin-Copolymer (EAO-Copolymer) umfasst, das der mathematischen Beziehung

$$y \leq 20 + 2{,}35x$$

genügt, in der y der Ethylengehalt in Molprozent (Mol-%) des EAO-Copolymers ist und x die Brookfield-Viskosität in Centipoise (cP) bei 100°C des EAO-Copolymers ist und die Viskosität mindestens 1 cP beträgt.

**2.** Zusammensetzung nach Anspruch 1, bei der das EAO-Copolymer einen Ethylengehalt von mindestens 5 Mol-% und nicht über 85 Mol-% hat.

**3.** Zusammensetzung nach Anspruch 1 oder Anspruch 2, bei der das EAO-Copolymer eine Viskosität nicht über 1000 cP bei 100°C hat.

**4.** Zusammensetzung nach einem der vorhergehenden Ansprüche, bei der das schlagzäh modifizierte aromatische Monovinylidenpolymer mindestens eines von hochschlagzähem Polystyrol (HIPS) und Acrylnitril/Butadien-Styrol (ABS) ist.

**5.** Zusammensetzung nach einem der vorhergehenden Ansprüche, bei der das EAO-Copolymer ein Ethylen/Propylen-Copolymer (EP-Copolymer) ist.

**6.** Zusammensetzung nach einem der vorhergehenden Ansprüche, bei der das EAO einen Grad der Ungesättigtheit

enthält, der sich in einem Verhältnis von Vinylgruppen zur Summe aller Ungesättigtheiten in dem Copolymer von mindestens 0,03 widerspiegelt.

**7.** Zusammensetzung nach einem der vorhergehenden Ansprüche, bei der das EAO in einer Menge von mindestens 1 Gew.-% bezogen auf das kombinierte Gewicht des schlagzäh modifizierten aromatischen Monovinylidenpolymers und des EAO-Copolymers vorliegt.

**8.** Zusammensetzung nach Anspruch 7, wobei die Menge an EAO 1 bis 5 Gew.-% bezogen auf das kombinierte Gewicht des schlagzäh modifizierten aromatischen Monovinylidenpolymers und des EAO-Copolymers beträgt.

**9.** Zusammensetzung nach einem der vorhergehenden Ansprüche, die ferner ein anderes Polymer als das schlagzäh modifizierte aromatische Monovinylidenpolymer und das EAO-Copolymer umfasst.

**10.** Zusammensetzung nach Anspruch 9, bei der das andere Polymer mindestens eines von Polyethylen niedriger Dichte, Polyethylen ultraniedriger Dichte, Polyethylen mittlerer Dichte, linearem Polyethylen niedriger Dichte, Polyethylen hoher Dichte, homogen verzweigtem linearem Ethylenpolymer, im Wesentlichen linearem Ethylenpolymer, pfropfmodifizierten Ethylenpolymeren, Ethylen-Vinylacetat-Interpolymer, Ethylen-Acrylsäure-Interpolymer, Ethylen-Ethylacetat-Interpolymer, Ethylen-Methacrylsäure-Interpolymer, Ethylen-Methacrylsäure-lonomer, homopolymerem Polypropylen, Polypropylen-Copolymer, statistischem Blockpolypropylen-Interpolymer, Polyetherblockcopolymer, Copolyesterpolymer, Polyphenylenether, Polyester/Polyether-Blockpolymeren, Ethylen-Kohlenmonoxid-Interpolymer, Polyethylenterephthalat, chloriertem Polyethylen, Styrol-Butadien-Styrol(SBS)-Interpolymer, Styrol-Ethylen-Butadien-Styrol(SEBS)-Interpolymer, und Mischungen von zwei oder mehreren dieser anderen Polymere ist.

**11.** Verfahren zur Verbesserung der ESCR eines schlagzäh modifizierten aromatischen Monovinylidenpolymers, wobei das Verfahren den Schritt umfasst, wo dem schlagzäh modifizierten aromatischen Monovinylidenpolymer eine ESCRverbessernde Menge eines EAO-Copolymers beigemischt wird, die der mathematischen Beziehung

$$y \leq 20 + 2{,}35x$$

genügt, in der y der Ethylengehalt in Mol-% des EAO-Copolymers ist und x die Brookfield-Viskosität in cP bei 100°C des EAO-Copolymers ist und die Viskosität mindestens 1 cP beträgt.

**12.** Verfahren nach Anspruch 11, bei dem das EAO-Copolymer mit dem schlagzäh modifizierten aromatischen Monovinylidenpolymer vermischt wird, bevor oder während das Polymer durch Polymerisation seiner monomeren Bestandteile hergestellt wird.

**13.** Verfahren nach Anspruch 11 oder Anspruch 12, bei dem das schlagzäh modifizierte aromatische Monovinylidenpolymer und/oder das EAO-Copolymer der Definition in einem der Ansprüche 2 bis 8 entspricht.

**14.** Gegenstand aus der Zusammensetzung nach einem der Ansprüche 1 bis 10.

**15.** Gegenstand nach Anspruch 14 in Form einer Kühlschrankauskleidung oder -verpackung.

## Revendications

**1.** Composition comprenant :

A) un polymère de composé monovinylidène-aromatique, modifié choc ;
B) et un copolymère EAO d'éthylène et d'alpha-oléfine, pour lequel la relation mathématique suivante est satisfaite :

$$y \leq 20 + 2{,}35\ x$$

dans laquelle y représente la proportion d'éthylène dans le copolymère EAO, exprimée en pourcents en moles (% en moles), et x représente la viscosité Brookfield du copolymère EAO à 100 °C, exprimée en centipoises (cP), et dont la viscosité vaut au moins 1 cP.

**2.** Composition conforme à la revendication 1, dans laquelle, dans le copolymère EAO, la proportion d'éthylène vaut au moins 5 % en moles et n'excède pas 85 % en moles.

**3.** Composition conforme à la revendication 1 ou 2, dans laquelle le copolymère EAO présente à 100 °C une viscosité d'au plus 1000 cP.

**4.** Composition conforme à l'une des revendications précédentes, dans laquelle le polymère de composé monovinylidène-aromatique modifié choc est au moins l'un des suivants : polystyrène HIPS à haute résistance au choc, et copolymère ABS d'acrylonitrile, butadiène et styrène.

**5.** Composition conforme à l'une des revendications précédentes, dans laquelle le copolymère EAO est un copolymère EP d'éthylène et de propylène.

**6.** Composition conforme à l'une des revendications précédentes, dans laquelle le copolymère EAO comporte un certain degré d'insaturation, reflété par un rapport d'au moins 0,03 des groupes vinyle au nombre total d'insaturations présentes au sein du copolymère.

**7.** Composition conforme à l'une des revendications précédentes, dans laquelle le copolymère EAO se trouve en une quantité représentant au moins 1 % du poids total du polymère de composé monovinylidène-aromatique modifié choc et du copolymère EAO.

**8.** Composition conforme à la revendication 7, dans laquelle ladite quantité de copolymère EAO représente de 1 à 5 % du poids total du polymère de composé monovinylidène-aromatique modifié choc et du copolymère EAO.

**9.** Composition conforme à l'une des revendications précédentes, qui comprend en outre un autre polymère que le polymère de composé monovinylidène-aromatique modifié choc et le copolymère EAO.

**10.** Composition conforme à la revendication 9, dans laquelle ledit autre polymère est au moins l'un des suivants : polyéthylène basse densité, polyéthylène ultra-basse densité, polyéthylène moyenne densité, polyéthylène basse densité linéaire, polyéthylène haute densité, polymère d'éthylène linéaire à ramifications homogènes, polymère d'éthylène sensiblement linéaire, polymères d'éthylène modifiés par greffage, interpolymère d'éthy-lène et d'acétate de vinyle, interpolymère d'éthylène et d'acide acrylique, interpolymère d'éthylène et d'acétate d'éthyle, interpolymère d'éthylène et d'acide méthacrylique, ionomère d'éthylène et d'acide méthacrylique, polypropylène homopolymère, copolymère polypropylène, interpolymère polypropylène à bloc stastitique, copolymère à blocs polyéther, polymère copolyester, poly(phénylène éther), polymères à blocs polyester/polyéther, interpolymère d'éthylène et de monoxyde de carbone, poly(éthylène téré-phtalate), polyéthylène chloré, interpolymère styrène-butadiène-styrène (SBS), et interpolymère styrène-éthylène/butadiène-styrène (SEBS), y com-pris les mélanges de deux ou plus de ces autres polymères.

**11.** Procédé permettant d'améliorer la résistance ESCR (résistance à la fissuration sous contrainte environnementale) d'un polymère de com-posé monovinylidène-aromatique modifié choc, lequel procédé comporte une étape consistant à ajouter et mélanger au polymère de composé mono-vinylidène-aromatique modifié choc, en une quantité suffisante pour en augmenter la résistance ESCR, un copolymère EAO d'éthylène et d'alpha-oléfine, pour lequel la relation mathématique suivante est satisfaite :

$$y \leq 20 + 2{,}35\ x$$

dans laquelle y représente la proportion d'éthylène dans le copolymère EAO, exprimée en pourcents en moles (% en moles), et x représente la viscosité Brookfield du copolymère EAO à 100 °C, exprimée en centipoises (cP), et dont la viscosité vaut au moins 1 cP.

**12.** Procédé conforme à la revendication 11, dans lequel on ajoute et mélange le copolymère EAO au polymère de

composé mono-vinylidène-aromatique modifié choc avant ou au moment de la préparation de ce polymère par polymérisation de ses monomères constitutifs.

**13.** Procédé conforme à la revendication 11 ou 12, dans lequel le polymère de composé mono-vinylidène-aromatique modifié choc et/ou le copolymère EAO est ou sont tel(s) que défini(s) dans l'une des revendications 2 à 8.

**14.** Article comprenant une composition conforme à l'une des revendications 1 à 10.

**15.** Article conforme à la revendication 14, qui se présente sous la forme d'un revêtement intérieur de réfrigérateur ou d'un emballage.

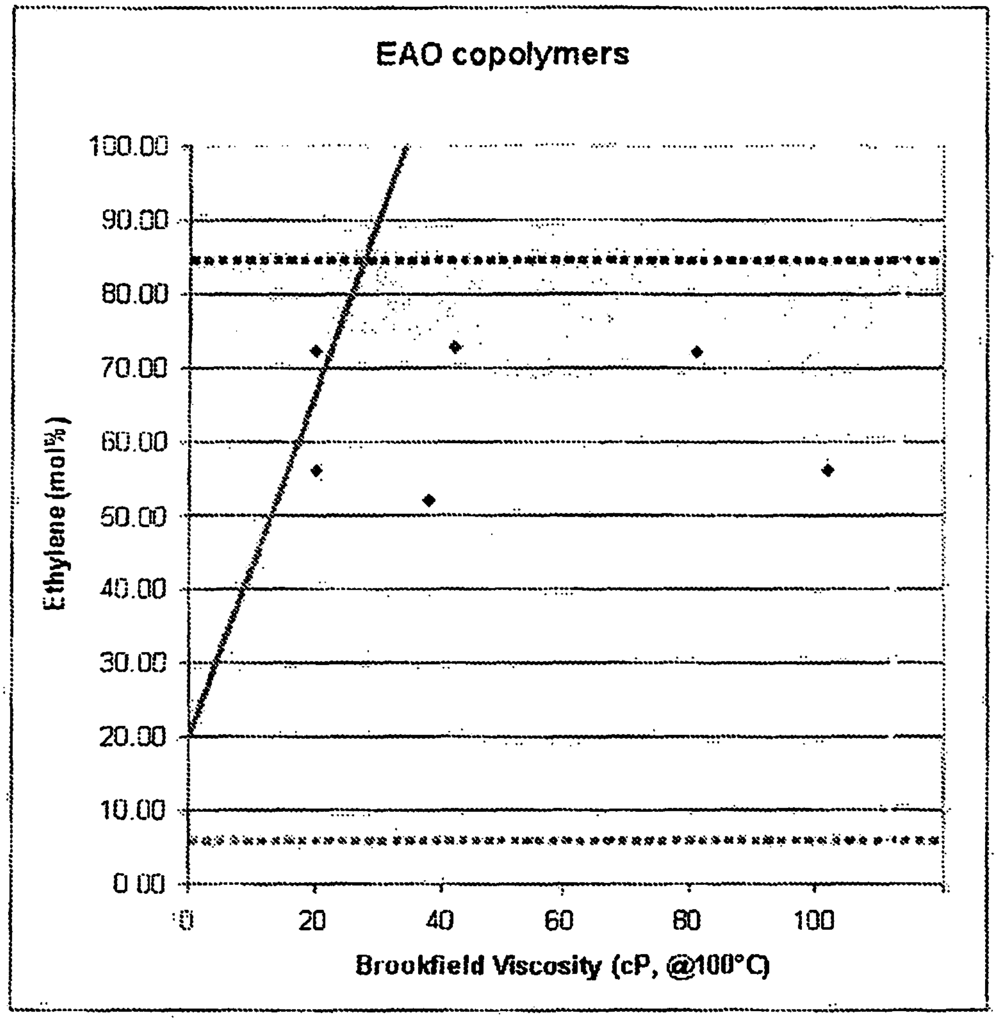
EAO copolymers
100.00
90.00
80.00
70.00
60.00
50.00
40.00
30.00
20.00
10.00
0.00
Ethylene (mol%)
0
20
40
60
80
100
Brookfield Viscosity (cP, @100°C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0329283 A
- US 6380305 B
- JP 11269322 A
- US 20040001962 A
- US 20060025640 A
- US 6335410 B
- US 5064802 A
- US 5721185 A
- WO 9319104 A
- WO 9500526 A
- WO 9514024 A
- WO 9849212 A
- WO 2004031250 A
- US 4666987 A
- US 4572819 A
- US 4585825 A
- US 5919983 A


### Non-patent literature cited in the description


- **Williams ; Ward.** *J. Polym. Sci., Polym. Let.,* 1968, vol. 6, 621
- **R. J. Young.** Introduction to Polymers. Chapman and Hall, 1981, 5